# EUROPÄISCHE PATENTANMELDUNG

(11) **EP 2 182 471 A1**
(43) Veröffentlichungstag der Anmeldung: **05.05.2010**
(21) Anmeldenummer: 08168224.7
(22) Anmeldetag: 03.11.2008
(51) Int. Cl.: G06K 19/077

(54) **Transponderetikett auf einer Metallfläche und Verfahren zum Anordnen eines Transponderetiketts auf einer Metallfläche**

(71) Anmelder: Schreiner Group GmbH & Co. KG, 85764 Oberschleissheim (DE)
(72) Erfinder: Surkau, Reinhard, 85764 Oberschleißheim (DE)
(74) Vertreter: Epping - Hermann - Fischer

(57) **Zusammenfassung**

Die vorliegende Erfindung beschreibt einen Aufbau eines Transponderetiketts auf einer metallischen Grundfläche. Als Antenne für das Transponderetikett wird eine schlitzförmige Ausnehmung in einer elektrisch leitenden Oberfläche, d.h. eine Schlitzantenne verwendet. Die metallische Grundfläche besitzt ebenfalls einen Schlitz, der an den Schlitz der Schlitzantenne angepasst ist. Dabei wird das Transponderetikett so auf der Grundfläche angebracht, dass hervorragende Sende- und Empfangseigenschaften erzielt werden können.

## Beschreibung

### Technisches Gebiet

Die Erfindung betrifft ein Transponderetikett auf einer elektrisch leitenden Oberfläche und ein Verfahren zum Anordnen eines Transponderetiketts auf einer elektrisch leitenden Oberfläche.

### Stand der Technik

Transponderetiketten werden in den heutigen Tagen in vielen unterschiedlichen Bereichen eingesetzt. Unter einem Transponderetikett versteht man eine Anordnung aus einem Trägermaterial, beispielsweise einer Kunststofffolie, auf der ein Transponderchip oder ein Modul mit einem Transponderchip zusammen mit einer Antenne angebracht ist.

Transponderetiketten werden häufig auf Werkstücken angebracht, um einen automatischen Herstellungsprozess zu steuern. Beispielsweise kommen sie auf Fertigungsstraßen zum Einsatz. Dabei erfolgt über das Transponderetikett ein Datenaustausch zwischen den Bearbeitungs-werkzeugen oder -stationen und dem Werkstück. Die Daten zwischen der Fertigungs-straße und dem Datenaustauschetikett werden häufig durch Hochfrequenz-signale übertragen. Liegt ein Transponderetikett nahe an der Oberfläche eines elektrisch leitenden Materials, so wird der Datenaustausch ganz erheblich beeinträchtigt.

Um die Beeinträchtigungen durch eine elektrisch leitende Oberfläche zu verringern, beschreibt EP 1275083 A ein Transponderetikett, das auf einem dielektrischen Sockel oder auf einem aufstellbaren Teil angeordnet ist. Das Transponderetikett wird in einem ausreichenden Abstand zu der Metalloberfläche des Werkstückes angebracht. Hierdurch werden die negativen Einflüsse durch die Metalloberfläche ausgeschaltet oder zumindest verringert.

In DE 102006029249 A wird ein quaderförmiger Transponder beschrieben, der an einem metallischen, mit einem Schlitz versehenen flachen Gegenstand befestigen ist. Der Transponder ragt durch den Schlitz und benötigt viel Platz, sodass eine flache Anordnungsweise nicht möglich ist. Der Transponderchip ist dabei elektrisch leitend mit dem Metallgegenstand verbunden, d. h. es besteht eine galvanische Kopplung zwischen dem Chip und dem Metall.

Solche Anordnungen vorn Transpondern an metallischen Oberflächen erfordern einen relativ großvolumigen Aufbau. Ein Anbringen solch voluminöse Anordnungen ist nicht für alle Einsatzgebiete möglich. Ferner wird dabei auch die Optik der mit solchen Transponderanordnungen versehenen Gegenstände negativ beeinflusst.

DE 102006051902 A offenbart eine Anordnung eines Transponders an einem metallischen Gegenstand, der eine Sensorspule aufweist. Zum Anbringen des Transponders an dem Gegenstand sind drei Varianten aufgezeigt: (1) Anordnen einer Sensorspule an einer Oberfläche des Metallteils im Bereich des geschlossenen Endes eines Schlitzes, der sich von einer Kante des Metallteils in das Innere erstreckt; (2) Anordnen der Sensorspule in der Mitte einer freien Kante des Metallteils, derart dass die Querschnittsfläche der Sensorspule die freie Kante überlappt; (3) Anordnen eines Transponderchips mit zwei Anschlussfahnen über einem durchgehenden Schlitz, wobei die Anschlussfahnen des Transponderchips auf beiden Seiten des Schlitzes elektrisch isoliert angebracht sind.

Hierbei ist eine sehr genaue Anordnung des relativ kleinen Transponderchips an dem entsprechenden Metallteil erforderlich. Dies ist in der erforderlichen Präzision für eine ungeübte Person nicht möglich. Daher eigen sich diese Transponderanordnungen nicht für das Anbringen von Transponder, die durch einen durchschnittlich begabten Benutzer auf einer Metalloberfläche eines Werkstücks angebracht werden sollen. Darüber hinaus sind solchen Transponderanordnung in der Produktion nur mit einem relativ hohen Prüfaufwand zu überprüfen, wodurch sich somit auch die Herstellungskosten verteuern.

Die vorliegende Erfindung hat zur Aufgabe, eine einfach zu realisierende Anordnung von einem Transponderetikett auf einer elektrisch leitenden Fläche bereitzustellen, die auch von einem ungeübten Anwender schnell zu realisieren ist.

### Darstellung der Erfindung

Dies wird durch die Merkmale der unabhängigen Patentansprüche erreicht.

Gemäß eines ersten Aspekts der vorliegenden Erfindung wird eine Transponderanordnung zum Betrieb eines Transponderetiketts auf einer elektrisch leitenden Grundfläche bereitgestellt. Diese Transponderanordnung umfasst ein Transponderetikett mit einer dielektrischen Trägerschicht, einem Transponderchip und einer Schlitzantenne, die als schlitzförmige Ausnehmung in einer elektrisch leitenden Schicht ausgebildet ist. Das Transponderetikett wird auf einer elektrisch leitenden Grundfläche angeordnet, die ebenfalls eine schlitzförmige Ausnehmung umfasst, die an die schlitzförmige Ausnehmung der Schlitzantenne angepasst ist.

Gemäß eines weiteren Aspekts der Erfindung wird ein Verfahren zur Herstellung einer Transponderanordung auf einer elektrisch leitenden Grundfläche bereitgestellt. Hierzu wird auf einer dielektrischen Trägerschicht eine Schlitzantenne angeordnet. An der Schlitzantenne wird ein Transponderchip angebracht. Weiterhin wird die Trägerschicht mit der Schlitzantenne und dem Transponderchip auf der elektrisch leitenden Grundfläche angebracht, wobei die elektrisch leitende Grundfläche eine schlitzförmige Ausnehmung besitzt, die an die Ausnehmung der Schlitzantenne angepasst ist.

Es ist der besondere Ansatz der vorliegenden Erfindung ein Transponderetikett auf einer Metallfläche mit einer Ausnehmung anzuordnen, wobei die Ausnehmung der Metallfläche an die Form der Antenne des Transponderetiketts angepasst ist.

Basierend auf diesem besonderen Ansatz kann das Transponderetikett der vorliegenden Erfindung auf besonders einfache und benutzerfreundliche Weise auf einem Metallobjekt oder einem anderen elektrisch leitenden Element angebracht werden. Während herkömmliche Transponderetiketten auf Metalloberflächen nicht oder nur mit großen Schwierigkeiten verwendet werden können, zeigt die Anordnung der vorliegenden Erfindung hervorragende Sende- und Empfangseigenschaften.

Für die erfindungsgemäßen Ausführungsformen können dabei die Metallteile auch aus eine nichtmetallischen, elektrisch leitfähigen Material hergestellt sein. Möglich sind zum Beispiel kohlenstoffhaltige Verbindungen oder ein leitfähiges Polymer. Daher ist im Folgenden unter dem Begriff Metall / metallisch auch jedes andere elektrisch leitfähige Material oder ein mit einer elektrisch leitfähigen Substanz beschichtetes Material zu verstehen.

Durch die Verwendung eines Transponderetiketts mit einer Schlitzantenne können Etiketten mit einer sehr geringen Bauhöhe hergestellt werden. Diese Etiketten können zunächst, wie alle anderen herkömmlichen Etiketten bedruckt oder in anderer Weise bearbeitet werden. Ein solches Transponderetikett kann darüber hinaus auch auf einfache Weise auf einer geeigneten Stelle auf einer Metallfläche appliziert werden. Somit können durch die erfindungsgemäßen Transponderetiketten-Anordnungen zahlreiche Vorteile sowohl hinsichtlich der Datenübertragungsqualität, als auch hinsichtlich der Anwendungsfreundlichkeit bei der Applikation erzielt werden.

Vorzugsweise stimmt die Form der schlitzförmigen Ausnehmung der elektrisch leitenden Grundfläche mit der Form der schlitzförmigen Ausnehmung der Schlitzantenne überein.

Gemäß einer bevorzugten Ausführungsform überlappen sich die schlitzförmige Ausnehmung der elektrisch leitenden Grundfläche und die schlitzförmigen Ausnehmung der Schlitzantenne vollständig, zumindest aber teilweise. Auf diese Weise können besonders gute Sende- und Empfangsergebnisse für die Transponderetiketten-Anordnung auf einer Metallfläche erzielt werden.

Vorzugsweise besitzt die Schlitzantenne eine geradlinige Kante, von der die schlitzförmige Ausnehmung ausgeht und die geradlinige Kante der Schlitzantenne verläuft parallel zu einer geradlinigen Kante der elektrisch leitfähigen Fläche. Hierdurch kann noch eine weitere Verbesserung der Übertragungseigenschaften der Transponderanordnung erreicht werden.

Gemäß einer bevorzugten Ausführungsform sind die Schlitzantenne und die elektrisch leitende Grundfläche galvanische getrennt. Die elektrisch leitende Grundfläche kann in diesem Fall als Hilfs- oder Sekundärantenne dienen und eine weitere Verbesserung der Sende- und Empfangseigenschaften ermöglichen.

Alternativ können die Schlitzantenne und die elektrisch leitende Grundfläche galvanische miteinander verbunden sein. Auch in diesem Fall kann eine ausgezeichnete Übertragungsqualität erreicht werden.

Vorzugsweise besitzt die Trägerschicht eine Klebstoffbeschichtung 4. Auf diese Weise kann das vorbereitete Transponderetikett schnell und einfach auf der elektrisch leitenden Grundfläche angebracht werden.

Gemäß einer bevorzugten Ausführungsform weist die Transponderanordnung ferner eine Schutzschicht über der Schlitzantenne und dem Transponderchip auf. Hierdurch wird der Aufbau unterhalb der Schutzschicht von Beschädigungen, insbesondere vor mechanischen Beeinträchtigungen geschützt. Zusätzlich kann die Schutzschicht auch bedruckt oder beschriftet werden und somit als Träger für optische Informationen dienen. Die Schutzschicht kann aus einer oder mehrerer Folien ähnlicher Lagen bestehen oder aus einer Masse, die in flüssiger Form aufgebracht wird. Darunter sind Übergüsse wie auch Abformungsmethoden wie Spritzguss zu verstehen.

Die Erfindung wird nachfolgend anhand der Zeichnungen detailliert beschrieben.

### Kurze Beschreibung der Abbildungen der Zeichnungen

Figur 1 zeigt eine Anordnung eines Transponderetiketts gemäß einer ersten Ausführungsform der Erfindung;

Figur 2 zeigt eine Anordnung eines Transponderetiketts mit einer alternativen Transponderantenne;

Figur 3 zeigt eine Anordnung eines Transponderetiketts mit weiteren optionalen Ausgestaltungsmerkmalen der vorliegenden Erfindung; und

Figur 4 zeigt ein Anwendungsbeispiel der erfindungsgemäßen Transponderanordnung.

### Bester Weg zur Ausführung der Erfindung

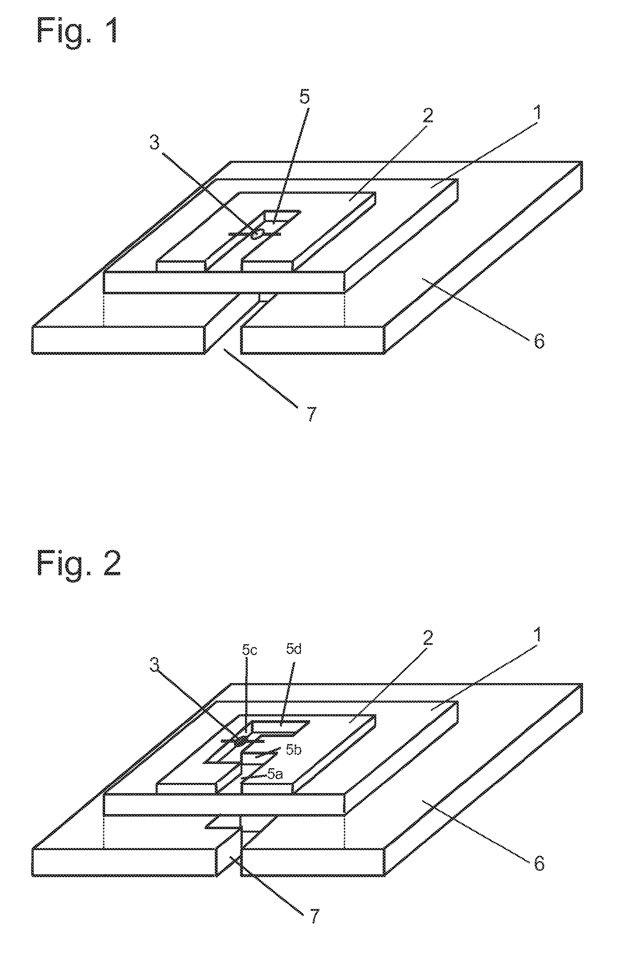

Fig. 1 zeigt eine Trägerschicht 1 aus einem elektrisch nicht leitenden, dielektrischen Trägermaterial. Als Material für eine solche Trägerschicht kann beispielsweise Kunststoff in Form einer Kunststofffolie verwendet werden. Alternativ kann die Trägerschicht aus Papier, Pappe oder einem anderen dielektrischen Material hergestellt werden.

Auf der Trägerschicht 1 befindet sich eine Antenne 2 aus einem elektrischen leitfähigen Material, vorzugsweise einem Metall. In diesem Ausführungsbeispiel wird als Antenne 2 eine Schlitzantenne verwendet. Eine solche Antenne besteht aus einer Fläche, in die eine schlitzförmige Aussparung 5 eingebracht ist. Vorzugsweise wird für die Schlitzantenne 2 eine Metallfolie, wie beispielsweise eine Aluminiumsfolie verwendet. An dieser Schlitzantenne 2 befindet sich ein Transponderchip 3. Der Transponderchip 3 kann entweder galvanisch oder kapazitiv, das heißt elektrisch leitend oder isolierend, an die Antenne 2 angekoppelt werden.

Ein so aufgebautes Transponderetikett aus der Trägerschicht 1 und der Antenne 2 mit dem Transponderchip 3 wird auf eine elektrische leitfähigen Fläche 6 mit einer schlitzförmigen Aussparung 7 aufgebracht. Diese elektrisch leitfähige Fläche 6 wird im Folgenden als Grundfläche bezeichnet. Vorzugsweise handelt es die bei der Grundfläche um eine Metallfläche, beispielsweise um ein Blech. Andere elektrisch leitfähigen Materialien, wie zum Beispiel leitfähige Kunststoffe, karbonhaltige Materialien oder ähnliches sind für die Grundfläche 6 ebenfalls möglich.

Für den erfindungsgemäßen Aufbau der Transponderanordnung sollte die Grundfläche 6 mindestens so groß sein, wie die Schlitzantenne 2 mit dem Transponderchip 3. Die Grundfläche kann dabei in Länge und Breite genau die gleichen Abmessungen haben wie die Schlitzantenne 2. Eine Grundfläche mit größeren Abmessungen in Länge und / oder Breite wie die Schlitzantenne 2 ist jedoch möglich und ggf. für die RFID-Signalübertragung vorteilhafter.

Die schlitzförmige Aussparung 7 und der Schlitz der Schlitzantenne 5 besitzen zumindest annähernd dieselbe geometrische Form. Das Transponderetikett wird so auf die Grundfläche 6 aufgebracht, dass sich der Schlitz 5 der Schlitzantenne 2 zumindest annähernd mit der Aussparung 7 der Grundfläche 6 überdeckt. Besonders gute Sende- und Empfangseigenschaften können erzielt werden, wenn der Schlitz 5 der Schlitzantenne 2 und die Aussparung 7 der Grundfläche 6 eine identische Form aufweisen und/oder der Schlitz 5 und die Aussparung 7 genau übereinander zu liegen kommen.

Für RFID-Anwendungen im UHF-Bereich haben sich besonders Schlitzantennen mit einer Schlitzbreite von wenigen Millimetern bewährt. Vorzugsweise besitzt der Schlitz einer solchen Schlitzantenne eine Breite von 2 bis 4 mm und hat eine Länge, die an Systemfrequenz und Chipimpedanz angepasst ist. Beispielsweise werden im UHF-Bereich Längen von etwas 35 bis 50 Millimeter verwendet. Um besonders gute Sende- und Empfangsergebnisse zu erzielen ist für die schlitzförmige Aussparung 7 in der Grundfläche 6 eine ähnliche, vorzugsweise identische, Ausgestaltung zu wählen.

Für die Schlitzantenne 2 wird bevorzugt eine Metallfolie verwendet, bei der sich von einer geradlinigen Kante am Rand der Metallfolie ein Schlitz in das Innere erstreckt. Vorzugsweise wird für die Schlitzantenne 2 eine elektrische leitfähige Grundfläche in Form eines Rechtecks gewählt. Insbesondere kann die Schlitzantenne eine quadratische Ausformung besitzen. Für ein solches Transponderetikett können besonders gute Ergebnisse erzielt werden, wenn die geradlinige Kante des Transponderetiketts mindestens annähernd mit einer geradlinigen Kante der darunter liegenden Grundfläche 6 übereinstimmt. Idealerweise verlaufen die beiden Kanten parallel zueinander.

Als besonders vorteilhaft hat sich eine Grundfläche 6 erwiesen, die zusätzlich zu der oben beschriebenen geradlinigen ersten Kante eine zweite Kante umfasst die genau oder zumindest annähernd senkrecht zu der ersten Kante verläuft. Durch diese zweite Kante wird ein Sekundär-Antennen-Effekt erweitert. Hierdurch wird für die Transponderanordnung im Zusammenspiel mit der Grundfläche 6 eine ausgezeichnete Omnidirektionalität für Sende- und Empfangseigenschaften erzielt.

Fig. 2 zeigt eine Ausführungsform der vorliegenden Erfindung, mit einer anderen Ausgestaltungsform der Transponderantenne. Im Gegensatz zu dem geradlinigen Verlauf des Schlitzes, wird hier als Transponderantenne eine Schlitzantenne 2a mit einen geschwungenen Verlauf des Schlitzes 5 verwendet. Ein erster Teil 5a des Schlitzes verläuft von einer Kante der Metallfolie zunächst annähernd senkrecht zu der Kante in das Innere der Metallfolie hinein. Daraufhin folgt ein zweiter Teil 5b des Schlitzes, der sich etwa parallel zu der Kante der Schlitzantenne erstreckt. Ein dritter Teil 5c des Schlitzes verläuft wiederum in die gleiche Richtung wie der erste Teil 5a des Schlitzes, und ein vierter Teil 5d des Schlitzes verläuft die gleiche Richtung wie der zweite Teil 5b des Schlitzes. Auf diese Weise erhält man eine Schlitzantenne 2a mit einem Schlitz, dessen Form an die Form eines Fragezeichen erinnert.

Durch geeignete Wahl der Position des Transponderchips 3 in einem der Teilbereiche 5a - 5d kann eine hervorragende Impedanzanpassung zwischen Schlitzantenne 2a und verwendetem Transponderchip 3 erzielt werden.

Für den erfindungsgemäßen Aufbau ist es erforderlich, dass auch die Grundfläche 6, auf der ein Transponderetikett mit der oben beschriebenen Schlitzantenne 2 angebracht wird, eine mindestens ähnliche schlitzförmige Aussparung 7 besitzt. Idealerweise stimmen der Schlitz 5 der Schlitzantenne 2 und die Aussparung 7 in der darunter liegenden Grundfläche6 in Form und/oder Position genau überein.

Neben den bereits beschriebenen geraden und geschwungenen Aussparungen in der Schlitzantenne und darunter liegender Grundfläche sind auch anderen Formen für die Aussparungen 5 und 7 möglich.

Auch wenn für die optimale Sende- und Anfangsleistung eines zuvor beschriebenen Aufbaus eines Transponderetiketts auf einer Metallfläche idealerweise der Schlitz der Schlitzantenne 2 und die Aussparung 7 der darunter liegenden Grundfläche 6 möglichst genau übereinstimmen sollten, so sind dennoch auch bei geringfügigen Abweichungen in Form und/oder Position noch ausgezeichnete Resultate zu erzielen. Daher kann ein solcher Aufbau, bei dem in der Regel ein vorgefertigtes Transponderetikett auf einer vorbereiteten Grundfläche aufgebracht wird, auch durch eine ungeübte Person in einfacher Weise schnell realisiert werden. Hierzu ist weder eine lange Einweisung der ausführenden Person erforderlich, noch werden für einen solchen Aufbau spezielle, teure Werkzeuge benötigt.

Ein so hergestelltes Transponderetikett ist nicht auf eine elektrisch leitende Grundfläche angewiesen. Es kann auch bereits vor dem Aufbringen auf die Grundfläche erfasst und ausgelesen werden. Auf diese Weise kann das Etikett beispielsweise direkt nach der Produktion überprüft werden. Somit ist eine sehr rasche und kostengünstige Qualitätskontrolle möglich.

Da für die Funktion des Transponderetiketts die elektrisch leitende Grundfläche nicht zwingend erforderlich ist, kann das Etikett auch auf nicht leitenden Flächen angebracht werden. Somit handelt es sich hierbei um ein sehr universell einsetzbares Transponderetikett.

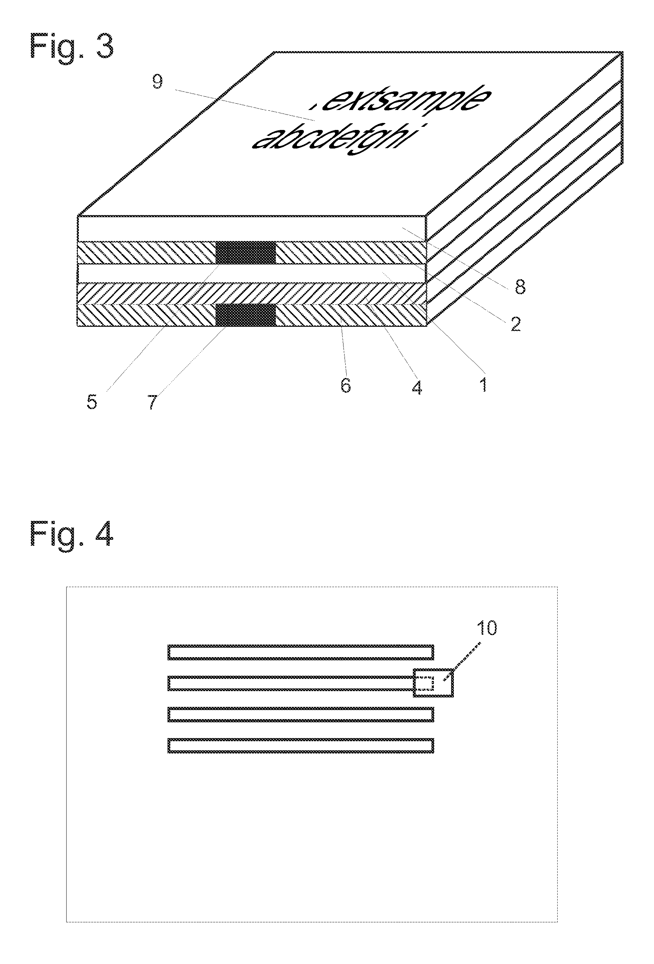

Um die Herstellung eines solchen Transponderetiketten-Aufbaus noch weiter zu vereinfachen und den Aufbau sowohl während der Herstellung als auch im späteren Betrieb zu schützen sind zahlreiche weitere Ausgestaltungsformen denkbar, wie sie zum Beispiel in Fig. 3 dargestellt sind. Diese zusätzlichen Optionen sind sowohl einzeln, als auch in einer geeigneten Kombination möglich.

Beispielsweise kann unter die dielektrische Trägerschicht 1 noch eine Klebstoffschicht 8 aufgetragen werden. Insbesondere kommen für die Klebstoffbeschichtung sogenannte Haftklebstoffe infrage. Hierdurch kann bei der Herstellung des erfindungsgemäßen Transponderaufbaus auf schnelle und einfache Weise das Transponder-Etikett mit der vorbereiteten Grundfläche 6 verbunden werden, ohne dass spezielle Arbeitsschritte für das Zusammenfügen erforderlich sind.

Um den gesamten Aufbau, besonders den Transponderchip 3 auf der Antenne, gegen Beschädigung zu schützen, kann über Transponderantenne 2 und Tranponderchip 3 eine Schutzfolie 8 aufgebracht werden. Alternativ kann der Aufbau auch mit einem Kunststoffaufguss oder Kunststoffverguss versehen werden. Hierdurch wird einerseits das vorbereitete Transponder-Etiketten vor dem Zusammenfügen mit der Metallfläche 6 und im späteren Betrieb auf einfache Weise gegen Beschädigungen geschützt.

Vorzugsweise handelt es sich bei der Schutzfolie 8 um eine opake, beispielsweise weiße, Folie. Diese Folie kann auch noch mit weiteren Beschriftungen 9 versehen werden. Hierdurch kann beispielsweise auch eine optische Kennzeichnung des Aufbaus erfolgen, so dass ein Benutzer dem Etikett auch ohne ein RFID-Lesegerät Informationen entnehmen kann. Ein solcher Aufdruck kann im Nachhinein transparent übergossen werden. So wird eine optische Lesbarkeit bei gleichzeitigem hochfesten Schutz der Transponderelektronik realisiert. Ferner kann durch geeignete Aufdrucke auch dem Benutzer eine Hilfestellung zur Positionierung des Etiketts auf der schlitzförmigen Ausnehmung der Metallfläche 6 gegeben werden. Dadurch kann der Benutzer das vorbereitete Transponder-Etiketten schnell und einfach auf der Metallfläche anbringen und so einen erfindungsgemäßen Aufbau erhalten.

Ein besonders guter Schutz des Transponderetiketts kann erreicht werden, indem die elektrische Trägerschicht 1 und die Schutzfolie 8 sowohl die Transponderantenne 2, als auch dem Transponderchip 3 vollständig umschließen und dabei keinerlei schlitzförmigen Aussparungen in Trägerschicht und Schutzfolie vorhanden sind.

Die Aussparung 7 in der Metallfläche 6 kann zusätzlich mit einem dielektrischen Füllstoff ausgefüllt werden, beispielsweise mit einem Kunststoff, Harz, Wachs, etc. Auch kann das Transponderetikett so gestaltet sein, dass ein Teil der Träger- und / oder Schutzfolie bei der Anbringung zunächst über den Rand der Kante einer blechartigen Grundfläche übersteht und dann durch Umschlagen um die blechartige Struktur den Schlitz überdeckt. Hierdurch wird sowohl das optische Erscheinungsbild verbessert, als auch eine erhöhte Stabilität und gegebenenfalls die Dichtigkeit des gekennzeichneten Objekts erzielt.

Alternativ kann die Aussparung 7 aber auch teilweise oder vollständig frei bleiben.

Es auch möglich, in Trägerschicht 1 und Schutzfolie 8 zumindest teilweise auch einen Schlitz einzubringen und so die Schlitzung der Grundfläche des darunter befindlichen geschlitzten Objekts möglichst wenig zu bedecken. Dies kann insbesondere dann von Vorteil sein, wenn in dem Metallobjekt als Aussparung 7 ein Schlitz verwendet wird, der auch andere Funktionen, wie beispielsweise eine Kühlöffnung, erfüllt. Dennoch bietet es sich auch in diesem Fall an, den Schlitz der Schlitzantenne durch Trägerschicht 1 und Schutzfolie 8 zumindest soweit zu bedecken, dass der Transponderchip 3 hierdurch geschützt ist.

Fig. 4 zeigt in diesem Zusammenhang einen Aufbau mit einem Transponderetikett beispielhaft an einem Lüftungsgitter eines Metallgehäuses. Dies kann zum Beispiel das Lüftungsgitter eines Elektrogeräts, beispielsweise eines Kühlschranks oder eines Netzteils sein. Selbstverständlich sind auch alle anderen schlitzförmigen Ausnehmungen an elektrisch leitfähigen Oberflächen für den erfindungsgemäßen Aufbau geeignet. Sollte die Metalloberfläche nicht bereist konstruktionsbedingt von sich aus eine geeignete schlitzförmige Ausnehmung besitzen, so kann auf durch Herstellen einer solchen Ausnehmung nahezu jede metallische Fläche für die erfindungsgemäßen Aufbau einer Transponderetiketten-Anordnung vorbereitet werden.

Ferner ist es ebenfalls möglich, die Transponderfunktion über ein weiteres Blech darzustellen, das zusätzlich angebracht wird. Dieses kann für eine RFID-Erfassung optimale Abmessungen aufweisen und an einer geeigneten Stelle freistehend als omnidirektional erfassbarer Transponderanordnung dienen.

Zusammenfassend beschreibt die vorliegende Erfindung einen Aufbau eines Transponderetiketts auf einer metallischen Grundfläche. Als Antenne für das Transponderetikett wird eine schlitzförmige Ausnehmung in einer elektrisch leitenden Oberfläche, d.h. eine Schlitzantenne verwendet. Die metallische Grundfläche besitzt ebenfalls einen Schlitz, der an den Schlitz der Schlitzantenne angepasst ist. Dabei wird das Transponderetikett so auf der Grundfläche angebracht, dass hervorragende Sende- und Empfangseigenschaften erzielt werden können.

## Patentansprüche

1. Transponderanordnung zum Betrieb eines Transponderetiketts auf einer elektrisch leitenden Fläche, umfassend:
ein Transponderetikett mit
einer dielektrischen Trägerschicht (1),
einem Transponderchip (3); und
einer Schlitzantenne (2) mit einer schlitzförmige Ausnehmung (5) in einer elektrisch leitenden Schicht; und
eine elektrisch leitende Grundfläche (6),
**dadurch gekennzeichnet, dass**
die elektrisch leitende Grundfläche (6) eine schlitzförmige Ausnehmung (7) umfasst, die an die schlitzförmig Ausnehmung (5) der Schlitzantenne (2) angepasst ist.

2. Transponderanordnung nach Anspruch 1 , wobei sich die schlitzförmige Ausnehmung (7) der elektrisch leitenden Grundfläche (6) und die schlitzförmigen Ausnehmung (5) der Schlitzantenne (2) zumindest teilweise überlappen.

3. Transponderanordnung nach Anspruch 1 oder 2, wobei die Form der schlitzförmigen Ausnehmung (7) der elektrisch leitenden Grundfläche (6) mit der Form der schlitzförmigen Ausnehmung (5) der Schlitzantenne (2) übereinstimmt.

4. Transponderanordnung nach einem der Ansprüche 1 bis 3, wobei die Schlitzantenne (2) eine geradlinige Kante aufweist, von der die schlitzförmige Ausnehmung (5) ausgeht und die geradlinige Kante der Schlitzantenne (2) parallel zu einer geradlinigen Kante der elektrisch leitfähigen Grundfläche (6) verläuft.

5. Transponderanordnung nach einem der Ansprüche 1 bis 4, wobei die Schlitzantenne (2) und die elektrisch leitende Grundfläche (6) galvanische getrennt zueinander angebracht sind.

6. Transponderanordnung nach einem der Ansprüche 1 bis 5, wobei die Trägerschicht (1) eine Klebstoffbeschichtung (4) aufweist.

7. Transponderanordnung nach einem der Ansprüche 1 bis 6, das ferner eine Schutzschicht über der Schlitzantenne (2) und dem Transponderchip (3) aufweist.

8. Verfahren zur Herstellung einer Transponderanordung auf einer elektrisch leitenden Grundfläche das die folgende Schritte umfasst:
Anordnen einer Schlitzantenne mit einer schlitzförmige Ausnehmung in einer elektrisch leitenden Schicht auf einer dielektrischen Trägerschicht;
Anbringen eines Transponderchips an der Schlitzantenne;
**gekennzeichnet durch**
einen Schritt zum Anbringen der Trägerschicht mit der Schlitzantenne und dem Transponderchip auf der elektrisch leitenden Grundfläche mit einer Ausnehmung, die an die Ausnehmung der Schlitzantenne angepasst ist.

9. Verfahren zur Herstellung einer Transponderanordnung nach Anspruch 8 wobei der Schritt zur Herstellung einer schlitzförmigen Ausnehmung in der elektrisch leitenden Grundfläche eine schlitzförmigen Ausnehmung erzeugt, deren Form mit der Form der Ausnehmung in der Schlitzantenne übereinstimmt.

10. Verfahren zur Herstellung einer Transponderanordnung nach Anspruch 8 oder 9, wobei der Schritt zum Anbringen der Trägerschicht mit der Schlitzantenne und dem Transponderchip auf der elektrisch leitenden Grundfläche die Trägerschicht so anordnet, dass sich die schlitzförmigen Ausnehmung der Schlitzantenne und die schlitzförmige Ausnehmung der elektrisch leitenden Grundfläche zumindest teilweise überlappen.

11. Verfahren zur Herstellung einer Transponderanordnung nach einem der Ansprüche 8 bis 10, wobei der Schritt zum Anbringen der Trägerschicht mit der Schlitzantenne und dem Transponderchip auf der elektrisch leitenden Grundfläche die Trägerschicht so anordnet, dass sich die schlitzförmigen Ausnehmung der Schlitzantenne und die schlitzförmige Ausnehmung der elektrisch leitenden Grundfläche vollständig überlappen.

12. Verfahren zur Herstellung einer Transponderanordnung nach einem der Ansprüche 8 bis 11, wobei die Schlitzantenne eine geradlinige Kante aufweist, von der die schlitzförmige Ausnehmung ausgeht und die Trägerschicht so auf der elektrisch leitenden Grundfläche angebracht wird, dass die geradlinige Kante der Schlitzantenne parallel zu einer geradlinigen Kante der elektrisch leitfähigen Grundfläche verläuft.

13. Verfahren zur Herstellung einer Transponderanordnung nach einem der Ansprüche 8 bis 12, wobei die Schlitzantenne galvanische getrennt auf der elektrisch leitenden Grundfläche angebracht wird.

14. Verfahren zur Herstellung einer Transponderanordnung nach einem der Ansprüche 8 bis 13, das ferner die Trägerschicht auf die elektrisch leitende Grundfläche aufklebt.

15. Verfahren zur Herstellung einer Transponderanordnung nach einem der Ansprüche 8 bis 13, das ferner einen Schritt umfasst zum Aufbringen einer Schutzschicht über der Schlitzantenne und dem Transponderchip.
